# EUROPÄISCHE PATENTSCHRIFT

(11) **EP 0 411 284 B1**
(45) Veröffentlichungstag und Bekanntmachung des Hinweises auf die Patenterteilung: **07.09.1994**
(21) Anmeldenummer: 90111265.6
(22) Anmeldetag: 14.06.1990
(51) Int. Cl.: F16D 66/02

(54) **Verschleissanzeiger zum Anzeigen der Abnutzungsgrenze von Bremsbelägen von Kraftfahrzeugen und dergleichen**
Wear indicator for indicating the wear limit of brake pads of automobile vehicles and the like
Indicateur d'usure pour indiquer la limite d'usure des garnitures de frein de véhicules automobiles et analogue

(30) Priorität: 26.07.1989 DE 8909084 U
(43) Veröffentlichungstag der Anmeldung: 06.02.1991
(73) Patentinhaber: TEXTAR GmbH, D-51375 Leverkusen (DE)
(72) Erfinder: Beh, Holger, D-5060 Bergisch-Gladbach 2 (DE)
(74) Vertreter: Dallmeyer, Georg, Dipl.-Ing.

(56) Entgegenhaltungen:
- EP-A- 0 321 661
- GB-A- 1 445 539

## Beschreibung

Die Erfindung bezieht sich auf eine Bremsbacke mit einer Trägerplatte, mit einem auf der Trägerplatte haftenden Reibbelag, mit einem Verschleißanzeiger zum Anzeigen der Abnutzungsgrenze von Bremsbelägen, insbesondere Scheibenbremsbelägen von Kraftfahrzeugen u.dgl., bei dem eine U-förmige, isolierte, elektrische Leiterschleife in einem in einer Bohrung der Trägerplatte der Bremsbacke eingesetzten Stopfen angeordnet ist und bei Erreichen der Abnutzungsgrenze in Kontakt mit einer Bremsscheibe gelangt, durch den ein Signal einer elektrischen Warnanlage ausgelöst wird.

Verschleißanzeiger der vorstehenden Art sind in verschiedenen Ausführungsformen bekannt. Nach der EP-A 0 273 801 besteht der Verschleißanzeiger aus einer einzigen Buchse aus elastischem Kunststoff, in der sich unmittelbar die Leiterschleife befindet. Die Buchse ist von der Rückseite der Trägerplatte mit einer Bohrung der Trägerplatte und des Reibbelages angeordnet. Das Festhalten der Buchse in der Bohrung erfolgt mittels einer Spreizscheibe, die sich in der Bohrung der Trägerplatte selbständig verankert. Eine ausreichende Sicherung zum Festhalten des Stopfens in der Bohrung des Reibbelages ist hierbei nicht gewährleistet.

Bei der Verschleißanzeigevorrichtung für Bremsbeläge von Scheibenbremsen nach der DE-A- 32 30 266 hintergreift das Halteelement als flache, z.B. gestanzte Federklammer, mit ihren Federschenkeln eine von dem Belag freie Lochung der Belagträgerplatte, wobei der Kopfteil des Halteelemtes bzw. der Federklammer die Leiterschleife in eine Aussparung aufnimmt. Eine solche Anzeigevorrichtung ist nur an den von dem Reibbelag freien Stellen der Trägerplatte anwendbar. Bei der Verschleißanzeigevorrichtung nach dem DE-GM 73 19 150 weist eine Bundbuchse eine durchgehende, abgesetze Axial-Bohrung auf, in welche die Leiterschleife geführt ist. Dabei wird die Leiterschleife in der Bundbuchse durch radiale Verquetschung in einer metallischen Zylinderhülse fixiert. Die Bundbuchse kann nur an der Verschleißseite des Reibbelages in die Bohrung eingesetzt werden. Das DE-U- 86 24 060 beschreibt einen dreiteiligen Verschleißanzeiger, bei dem die Einzelteile durch die entsprechende Außenprofilierung ineinandergreifen und sich verriegeln. Der Bremsbelagverschleiß wird dabei über einen einpoligen Leiterdraht angezeigt. Die Herstellung des dreiteiligen Verschleißanzeigers ist verhältnismäßig kompliziert und kostenintensiv.

Aus der GB 1 445 539 ist eine gattungsgemäße Bremsbacke mit einem Verschleißanzeiger zum Anzeigen der Abnutzungsgrenze des Reibbelags bekannt. Der Verschleißanzeiger weist eine U-förmige, isolierte, elektrische Leiterschleife in einem Stopfen auf, der in einer Halterungsbuchse angeordnet ist und mit der Halterungsbuchse in einer Bohrung der Trägerplatte eingesetzt ist.

Aus der EP-A-0 320 167 ist es bei einer Bremsbacke bekannt, eine in einem hülsenartigen Teil aufgenommene Kabelführungsbuchse in eine Ausnehmung des Reibbelags einzusetzen.

Aufgabe der Erfindung ist es, einen Verschleißanzeiger der anfangs genannten Art zu schaffen, bei bei sicherer Funktion einfach im Aufbau und in der Herstellung kostengünstig ist. Zur Lösung dieser Aufgabe dienen die Merkmale des Anspruchs 1.

Der Verschleißanzeiger der vorstehend genannten Art zeichnet sich durch eine Vereinigung von mehreren Vorteilen aus. Die Anzeigevorrichtung besteht aus einfach herzustellenden Teilen, nämlich aus Buchsen oder Hülsen mit glattem Umfang. Hierbei sind nur zwei Hülsen vorgesehen, wodurch der Herstellungsaufwand gering ist. Der in die Bohrung der Trägerplatte einzusetzende Stopfen enthält zugleich die Kabelführungsbuchse, die in dem Stopfen, d.h. in der Halterungsbuchse, etwas zurücksteht, so daß die Bohrung in der Trägerplatte bzw. in dem Reibbelag sich nur nach der Länge der Halterungsbuchse zu richten braucht. Die beiden Teile des Verschleißanzeigers bilden eine handhabbare Einheit. Durch die konstante Einbautiefe der Halterungsbuchse wird für den Einsatz des Bremsbelages am Kraftfahrzeug eine gleichmäßige Abnutzung bis zur vordefinierten Restbelagstärke gewährleistet und somit das Reibbelagmaterial optimal ausgenutzt, was einen wirtschaftlichen und ökologischen Vorteil darstellt.

Die Halterungsbuchse ist am freien Ende mit einem innenliegenden Kragen versehen, mittels dessen die Kabelführungsbuchse durch Schnappverbindung untergriffen werden kann. Die Kabelführungsbuchse selbst weist im Inneren zwei durchgehende Bohrungen und an einem Ende eine Quernut auf. Damit ist die Leiterschleife in der Kabelführungsbuchse sicher festgelegt, was sich auch auf die sichere Lage der Abnutzungsgrenze günstig auswirkt. Vorteilhaft greifen ferner Halterungsbuchse und Kabelführungsbuchse mittels Preßpassung ineinander, wodurch die Einstückigkeit des aus zwei Teilen bestehenden Stopfens für die Handhabung gewährleistet ist.

Gemäß einem weiteren Merkmal der Erfindung soll die Halterungsbuchse aus Metall, z.B. Messung oder Stahl, bestehen. Dabei ist nicht ausgeschlossen, die Halterungsbuchse aus einem temperaturbeständigen Duro- oder Thermoplast mit entsprechender Festigkeit zu bilden.

Die Erfindung wird anhand eines in der Zeichnung dargestellten Ausführungsbeispiels nachstehend erläutert:

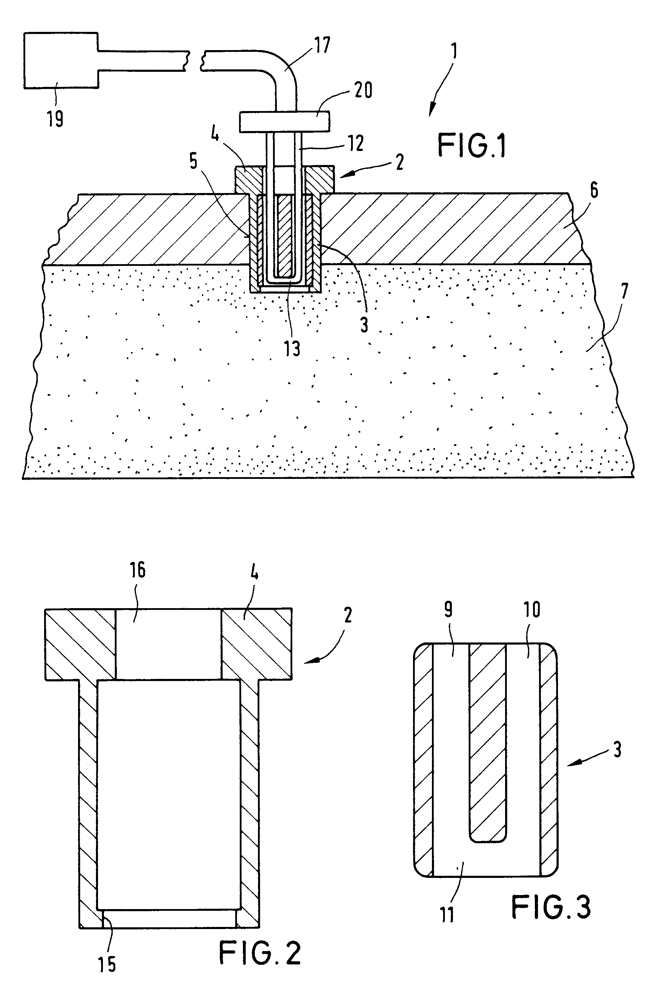

Fig. 1 zeigt die Ausbildung und Anordnung eines Ausführungsbeispieles des Verschleißanzeigers gemäß der Erfindung im Schnitt schematisch,
Fig. 2 stellt die Halterungsbuchse im Längsschnitt und im Schema dar,
Fig. 3 veranschaulicht die Kabelführungsbuchse ebenfalls im Schema und im Längsschnitt.

Der Verschleißanzeiger 1 weist eine Halterungsbuchse 2 und eine Kabelführungsbuchse 3 auf, die ineinandersteckbar ausgebildet sind. Die Halterungsbuchse 2 in Form einer zylindrischen Hülse besitzt einen Flansch 4, durch den die Einbautiefe der Halterungsbuchse in einer Bohrung einer Trägerplatte und einem an der Trägerplatte 6 haftenden Reibbelag 7 zuverlässig begrenzt wird.

Die innenliegende Kabelführungsbuchse 3 ist mit zwei Bohrungen 9 und 10 versehen. Diese Bohrungen sind an einem Ende durch eine Quernut 11 miteinander verbunden. Diese Quernut 11 nimmt den Verbindungsteil des U-förmigen Leiters auf und ist zweckmäßig so tief in der Kabelführungsbuchse angebracht, daß der Verbindungsteil 13 des U-förmigen Leiterteils 12 in der Kabelführungsbuchse 3 so geführt ist, daß der Leiterdraht nicht vorzeitig beschädigt wird und eventuell zu früh den entsprechenden Warnkreis auslöst.

Die hülsenförmige Halterungsbuchse 2 mit dem Flansch 4 an einem Ende ist am anderen Ende mit einem innen vorspringenden Ansatz oder Kragen 15 versehen. Dieser dient zur sicheren Fixierung der Kabelführungsbuchse 3 in der Halterungsbuchse 2. Vorteilhaft ist eine Schnappverbindung vorgesehen, wobei die eingesteckte Kabelführungsbuchse 3 knapp von dem Kragen 15 untergriffen wird. Auf diese Weise bilden Halterungsbuchse 2 und Kabelführungsbuchse 3 eine handhabbare Einheit. Am Flanschende weist die Halterungsbuchse 2 eine Bohrung 16 für den Durchgang der Leiterteile 12 des Kabels 17 auf. Die Halterungsbuchse 2 und die Kabelführungsbuchse 3 sind im Durchmesser zweckmäßig so zueinander bemessen, daß die Kabelführungsbuchse 3 in der Halterungsbuchse 2 mit Preßpassung liegt. Infolge der Preßpassung und der dabei auftretenden Kräfte werden die die Kabelteile 12 aufnehmenden Bohrungen einer gewissen Preßkraft ausgesetzt, wodurch eine Spannung aller Teile zueinander erreicht wird.

Die fertig montierte Kabelführungsbuchse 3 mit dem zugehörigen Leiterdraht 12 wird in die Halterungsbuchse 2 eingeführt und über den unteren Kragen 15 sicher gehalten. Die Leiter außerhalb der Halterungsbuchse 2 werden in einem Kabel 17 vereinigt, das am freien Ende mit einem Stecker 19 versehen sein kann. Mit 20 ist ein Knickschutz bezeichnet, der zusätzlich an dem Kabel 17 angebracht sein kann.

Die Preßpassung für die Halterungsbuchse 2 und die Kabelführungsbuchse 3 ermöglicht, daß man zur Befestigung des Verschleißanzeigers keine Klebstoffe verwenden muß, was werkstoffmäßig und arbeitsmäßig von Vorteil ist.

Die Halterungsbuchse 2 ist vorteilhaft aus Metall gefertigt, z.B. einer Kupfer-Zinklegierung oder auch aus einem unlegierten Stahl, z.B. St 50. Die Kabelführungsbuchse 3 besteht vorteilhaft aus einem temperaturbeständigen Duro- oder Thermoplast.

## Patentansprüche

1. Bremsbacke mit einer Trägerplatte (6), mit einem auf der Trägerplatte (6) haftenden Reibbelag (7), mit einem Verschleißanzeiger zum Anzeigen der Abnutzungsgrenze des Reibbelags (7), bei dem eine U-förmige, isolierte, elektrische Leiterschleife (12) in einer in einer Bohrung (5) der Trägerplatte (6) eingesetzten Halterungsbuchse (2) in einem Stopfen (3) angeordnet ist und bei Erreichen der Abnutzungsgrenze in Kontakt mit einer Bremsscheibe gelangt, durch den ein Signal einer elektrischen Warnanlage ausgelöst wird, wobei der Stopfen (3) aus einer die Leiterschleife (12) aufnehmenden Kabelführungsbuchse (3) besteht,
**dadurch gekennzeichnet,**
daß die Halterungsbuchse (2) auf der dem Reibbelag (7) abgewandten Seite einen Flansch (4) aufweist, daß die Kabelführungsbuchse (3) in die Halterungsbuchse (2) an der flanschlosen Seite einsteckbar ist, und daß die Kabelführungsbuchse (3) kürzer als die Halterungsbuchse (2) ist.

2. Bremsbacke nach Anspruch 1, dadurch gekennzeichnet, daß die Halterungsbuchse (2) am freien Ende mit einem innenliegenden Kragen (15) versehen ist, mittels dessen die Kabelführungsbuchse (3) vorzugsweise durch Schnappverbindung untergriffen wird.

3. Bremsbacke nach Anspruch 1 oder 2, dadurch gekennzeichnet, daß die Kabelführungsbuchse (3) im Inneren zwei durchgehende Bohrungen (9,10) und am Ende eine Quernut (11) aufweist.

4. Bremsbacke nach einem der Ansprüche 1 bis 3, dadurch gekennzeichnet, daß die Halterungsbuchse (2) und Kabelführungsbuchse (3) mittels Preßpassung ineinandergreifen.

5. Bremsbacke nach einem der Ansprüche 1 bis 4, dadurch gekennzeichnet, daß die Halterungsbuchse (2) aus Metall, z.B. Messing oder Stahl besteht.

6. Bremsbacke nach einem der Ansprüche 1 bis 5, dadurch gekennzeichnet, daß die Kabelführungsbuchse (3) aus einem temperaturbeständigen Duro- oder Thermoplast gebildet ist.

7. Bremsbacke nach einem der Ansprüche 1 bis 6, dadurch gekennzeichnet, daß das Leiterkabel (17) außerhalb der Halterungsbuchse einen Knickschutz (20), z.B. in Form einer Scheibe o.dgl. aufweist.

## Claims

1. A brake pad comprising a support plate (6), a friction lining (7) adhered to said support plate (6) and a wear indicator for indicating the wear limit of said friction lining (7) wherein a U-shaped insulated electric conductor loop (12) is provided in a plug (3) of a holding bushing (2) inserted into a bore (5) of said support plate (6) and which comes into contact with a brake disc upon reaching said wear limit, whereby a signal from an electric alarm means is triggered, said plug (3) consisting of a wire guide bushing (3) receiving said conductor loop (12),
characterised in
that said holding bushing (2) has a flange (4) on the side averted from said friction lining (7), that said wire guide bushing (3) may be plugged into said holding bushing (2) on the flangeless side, and that said wire guide bushing (3) is shorter than said holding bushing (2).

2. The brake pad of claim 1, characterised in that the free end of said holding bushing (2) is provided with an interior collar (15) by which said wire guide bushing (3) is engaged from below, preferably by snap joining.

3. The brake pad of claim 1 or 2, characterised in that said wire guide bushing (3) has two throughbores (9, 10) provided on the inside and a transversal groove (11) at the end.

4. The brake pad of one of claims 1 to 3, characterised in that said holding bushing (2) and said wire guide bushing (3) are in press fitted engagement with each other.

5. The brake pad of one of claims 1 to 4, characterised in that said holding bushing (2) is made of metal, e.g. brass or steel.

6. The brake pad of one of claims 1 to 5, characterised in that said wire guide bushing (3) is made of a temperature resistent duroplastic or thermoplastic material.

7. The brake pad of one of claims 1 to 6, characterised in that said conductor wire (17) has an anti-kinking means (20) outside said holding bushing (2), which is in the form of a disc or the like, for example.

## Revendications

1. Segment de frein comprenant une plaque-support (6), une garniture de frein (7) adhérant à la plaque-support (6), un indicateur d'usure pour indiquer la limite d'usure de la garniture de frein (7), segment dans lequel une boucle de conducteur électrique isolé en forme de U (12) est disposée, dans un bouchon (3), dans un manchon de support (2) placé dans un alésage (5) de la plaque-support (6) et entre en contact, lorsque la limite d'usure est atteinte, avec un disque de frein par lequel est déclenché un signal d'une installation d'avertissement électrique, le bouchon (3) consistant en un manchon de guidage de câble (3) recevant la boucle de conducteur (12), caractérisé en ce que le manchon de support (2) présente une collerette (4) du côté opposé à la garniture de frein (7), que le manchon de guidage de câble (3) peut être introduit dans le manchon de support (2), du côté sans collerette, et que le manchon de guidage de câble (3) est plus court que le manchon de support (2).

2. Segment de frein suivant la revendication 1, caractérisé en ce que le manchon de support (2) est pourvu, à son extrémité libre, d'un rebord (15) situé vers l'intérieur qui vient en prise sous le manchon de guidage de câble (3), de préférence par assemblage à encliquetage.

3. Segment de frein suivant la revendication 1 ou 2, caractérisé en ce que le manchon de guidage de câble (3) présente, à l'intérieur, deux alésages traversants (9,10) et, à une extrémité, une rainure transversale (11).

4. Segment de frein suivant l'une des revendications 1 à 3, caractérisé en ce que le manchon de support (2) et le manchon de guidage de câble (3) s'emboîtent par assemblage sous presse.

5. Segment de frein suivant l'une des revendications 1 à 4, caractérisé en ce que le manchon de support (2) est en métal, par exemple laiton ou acier.

6. Segment de frein suivant l'une des revendications 1 à 5, caractérisé en ce que le manchon de guidage de câble (3) est formé en une matière plastique dure ou thermoplastique résistant à la température.

7. Segment de frein suivant l'une des revendications 1 à 6, caractérisé en ce que le câble conducteur (17) présente, en dehors du manchon de support, une protection contre le pliage (20), par exemple, sous forme d'un disque ou autre.
